# EUROPEAN PATENT APPLICATION

(11) **EP 1 814 112 A1**
(43) Date of publication of application: **01.08.2007**
(21) Application number: 06301205.8
(22) Date of filing: 01.12.2006
(51) Int. Cl.: G11B 7/0045, G11B 7/0055, G11B 7/26, G11B 7/006

(54) **Method for recording on an optical recording medium**

(30) Priority: 23.12.2005 EP 05112899
(71) Applicant: Thomson Licensing S.A., 92100 Boulogne-Billancourt (FR)
(72) Inventor: Braeuer, Dietmar, 78052 Villingen-Schwenningen (DE); Hofmann, Holger, CA, Ventura (US); Richter, Hartmut, 78052 Villingen-Schwenningen (DE); Pilard, Gael, 78087 Mönchweiler (DE)
(74) Representative: Schmidt-Uhlig, Thomas

(57) **Abstract**

The invention relates to a method for recording on an optical recording medium, to an optical recording medium suitable for this method, and to a device for writing to optical recording media using such method or optical recording medium.

According to the invention the recording process is split into two tasks: Pre-writing (11) an optical recording medium, e.g. in a stationary device, and recording (13) on the optical recording medium with a low-power write strategy, e.g. in a mobile device.

## Description

The invention relates to a method for recording on an optical recording medium, to an optical recording medium suitable for this method, and to a device for writing to optical recording media using such method or optical recording medium.

Especially in mobile devices for optical recording media the power consumption is an important issue. This is all the more the case for recording devices. One major power consuming component in a recorder for optical recording media is the laser driver. Its power consumption has a linear relation to the optical light output power of the driven laser diode. Above the laser threshold the relation is directly proportional.

It is an object of the present invention to propose a method for recording on an optical recording medium with a reduced power consumption.

According to the invention, this object is achieved by a method for recording on an optical recording medium, having the steps of:
- pre-writing the optical recording medium; and
- recording on the optical recording medium with a low-power write strategy.
   The invention proposes to split the recording process into two tasks: Pre-writing an optical recording medium in a stationary device and writing with a special low-power write strategy in a mobile device. The special low-power write strategies, which can only be used with the pre-treated recording media, work with a lower average laser light power than usual overwriting strategies. Two exemplary types of pre-treated optical recording media are pre-erased media, where the write strategy consists essentially of the mark writing pulse train, i.e. where the erase power is set to zero, and pre-amorphized media, where the write strategy consists essentially of the erasing pulse(s) generating the spaces, i.e. where the write power is set to zero. A definition of erase power and write power can be found, for example, in ECMA-338: 80 mm (1,46 Gbytes per side) and 120 mm (4,70 Gbytes per side) DVD Re-recordable Disk (DVD-RW). The invention can be applied to single as well as multi-layer optical recording media.

The pre-writing of the optical recording medium is preferably performed with a constant power or a repeated inner multi-pulse part of a mark write pulse train while continuously following a track of the optical recording medium. While the first solution leads to a pre-erased medium, the latter solution leads to a pre-amorphized medium.

The pre-writing of the optical recording medium can be done in the factory following the manufacturing process, or in a drive for the optical recording medium. It is likewise possible to use the mobile device for pre-writing when the device is connected to a power supply. For example, while the batteries are recharged, the device advantageously starts with the pre-writing of the optical recording medium, and/or with defragmentation, erasing or any kind of actions, which either require a higher power or a longer processing time. Such operations should preferably not be done during the mobile use.

A method for recording on an optical recording medium, which is performed by a device capable of recording both with a low power write strategy and a standard write strategy, has the steps of:
- determining whether the optical recording medium is in a pre-written condition;
- if the optical recording medium is in a pre-written condition, performing recording with a low power write strategy;
- if the optical recording medium is not in a pre-written condition, performing recording with a standard write strategy. In order to be able to perform the above method, a device for recording on an optical recording medium has a recording condition detector for determining if the optical recording medium is in a pre-written condition, a low power write strategy pulse generator for recording with a low power write strategy, and a standard write strategy pulse generator for recording with a standard write strategy. It is first checked whether the optical recording medium is already pre-written or not. This is done, for example, by analyzing the recording layer of the optical recording medium, or by checking a "condition bit", which is set in a media information area. When the optical recording medium is already pre-written, recording is performed with the special low power write strategy. Else a standard write strategy is used.

Likewise, a device for preparing an optical recording medium for recording has a recording condition detector for determining if the optical recording medium is in a pre-written condition and a pre-write strategy pulse generator for pre-writing the optical recording medium. The recording condition detector determines if the optical recording medium is already pre-written. If this is not the case, pre-writing is initiated with a pre-write strategy.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: shows a typical write pulse train for direct overwriting on a phase change recording medium;
- Fig. 2: schematically illustrates a method according to the invention for recording on an optical recording medium using two devices;
- Fig. 3: illustrates a write pulse train for pre-amorphizing an optical recording medium;
- Fig. 4: depicts a write pulse train used for a pre-erased optical recording medium;
- Fig. 5: shows a write pulse train used for a pre-amorphized optical recording medium; and
- Fig. 6: schematically illustrates a method for recording on an optical recording medium performed by a recording device.

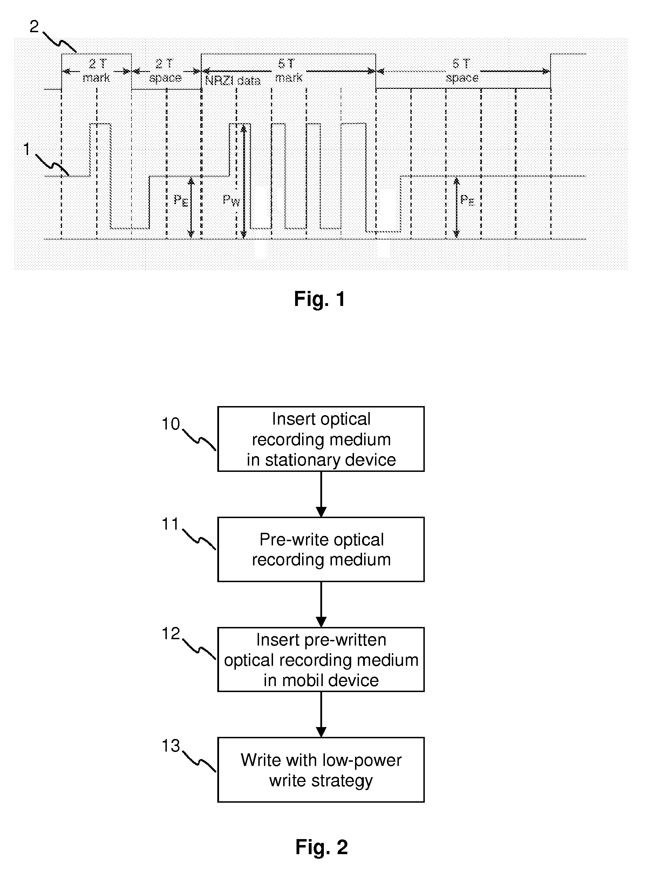

A typical write pulse train 1 for direct overwriting on a typical phase change optical recording medium is shown in Fig. 1. The underlying sequence 2 of marks and spaces is also indicated. In the figure, the horizontal axis represents time, the vertical axis represents the recording laser power. It can be seen that the marks are written with a multi-pulse train of a high write power P_{w}, whereas the spaces are written (erased) with a lower erase power P_{E}. The phase change recording material is in an amorphous state at a mark and in a crystalline state at a space. In the so-called typical high-to-low design of the layer stack of an optical recording medium, the marks result in a lower, the spaces in a higher reflection of incident laser light from an optical pickup unit. In a low-to-high design, as proposed for example for a high-density DVD by Ohmachi et al. in "Media Technologies of 20 GB Single-Layer Rewritable Phase-Change Disc for HD DVD System", Jap. J. Appl. Phys. Vol. 43, 2004, pp. 4978-4982, the marks result in a higher, the spaces in a lower reflection.

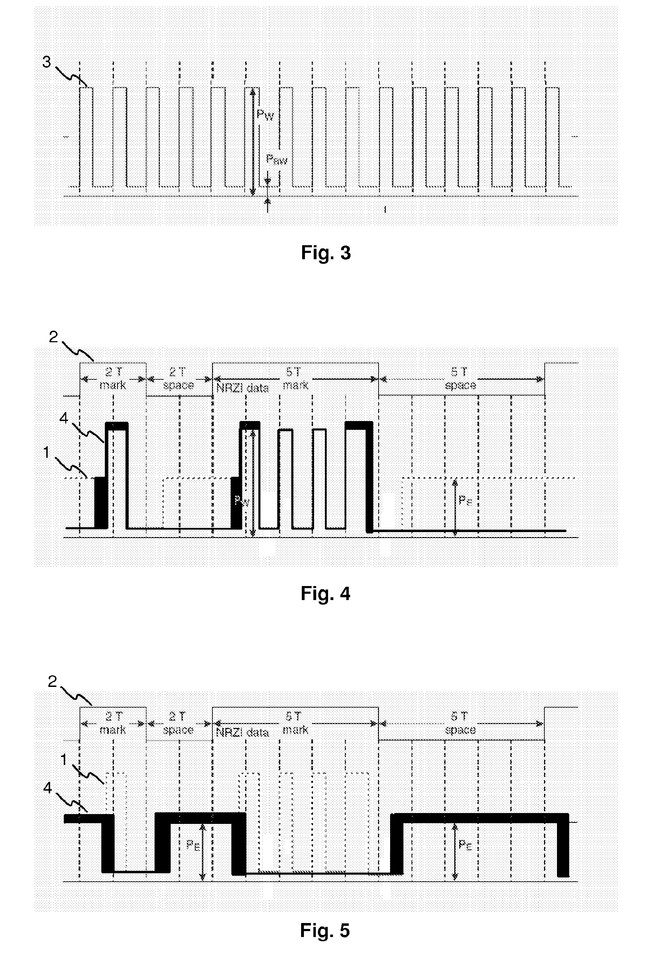

A method according to the invention for recording on an optical recording medium is schematically illustrated in Fig. 2. When an optical recording medium is inserted 10 in a stationary device, a pre-writing operation is initiated 11. When later the pre-written optical recording medium is inserted 12 in a mobile device, recording is performed 13 with a special low-power recording strategy. In order to achieve a completely crystalline (erased) or amorphized track, the optical recording medium is pre-written 11. A complete pre-erasure of the optical recording medium is achieved, for example, by applying a constant power Pe, similar to the one shown in Fig. 1, while continuously following the complete track spiral(s) of the optical recording medium. A complete pre-amorphizing is achieved, for example, by repeating the inner multi-pulse part of the mark write pulse train 1 shown in Fig. 1 continuously, as indicated by the pulse train 3 in Fig. 3. As indicated before, pre-writing can be performed directly after fabrication of the optical recording medium, in a stationary device, but also in a mobile device while it is connected to a power supply.

In a mobile device, a write strategy with a lower average power is used for a pre-written optical recording medium. In general the write strategy resembles the strategy shown in Fig. 1. However, it differs in that P_{E} or P_{w} are set to zero for a pre-erased or pre-amorphized optical recording medium, respectively. This simple approach results in data patterns on the optical recording medium which are sufficient for many uses. The data patterns are non-optimum due to the fact that the writing process and also the erasing process is thermal, while the layer stack of the optical recording medium has a non-zero heat conductivity and capacity. Therefore, in case of conventional phase-change media, heat which is introduced into the stack at an erase phase influences the writing of the adjacent marks and vice versa. To compensate for this missing heat leakage effect when recording with switched-off erase or write power for pre-treated media, the write strategies are modified. Figs. 4 and 5 depict exemplary write strategies for pre-erased (with P_{E} set to zero) and pre-amorphized (with P_{w} set to zero) media, respectively. In addition to the adapted write pulse train 4, the standard write pulse train 1 is also shown by dashed lines for comparison. The regions of the adapted write pulse trains 4, which are drawn with thick lines, indicate regions where power and pulse edge time are varied to achieve good recording results.

Tests with a commercially available, 23GB rewritable BD-RE disc from Sony yielded the following results. Using a standard write strategy with a write power of 6,5mW and an erase power of 3,25mw, the resulting jitter was below 6% (limit equalized) with a clear and symmetric eye pattern. Further parameters of the standard write strategy were dTtop=3 and Ttop=5 for all marks (2T to 9T), dTe=0 for 2T and 3T and dTe=1 for 5T to 9T. A definition of these parameters is found, for example, in US 2005/0058047. Amorphization of the disk was performed using a continuous write pulse scheme of 8/16 T followed by a laser off of 8/16T, with a peak power of 6,5mW. The obtained amorphous area was clean and did not exhibit any particular noise. In a first attempt the strategy used during the standard recording (dTtop=3 and Ttop=5 for 2T to 9T, dTe=0 for 2T and 3T and dTe=1 for 5T to 9T) was adapted by simply turning off the writing pulses. The erase power was set to 3,25mW. At this power, the crystalline marks were not completely formed, which led to a jitter of 22% and an asymmetric and unclear eye pattern. This effect was overcome by increasing the erase power, which leads to a better formation of the crystalline marks. An optimum was observed for 4,2mW with a jitter of 8,4%. By slightly modifying the write strategy, the jitter value was further improved. With the same erase power of 4,2mW, dTtop was set to 2 for 2T, 3 for 3T, 4 for 4T, and 4 for 5T to 9T. In addition, dTe was set to 0 for each symbol length. The obtained jitter was 7,6% with a clear and symmetric eye pattern. Practically, the above settings mean that the 2T erase pulse was 1/16 of T (about 1 ns) brighter, the erase pulse of the 3T remained the same, and the erase pulses of the 4T and the longer symbols were 2/16 of T (about 2 ns) shorter.

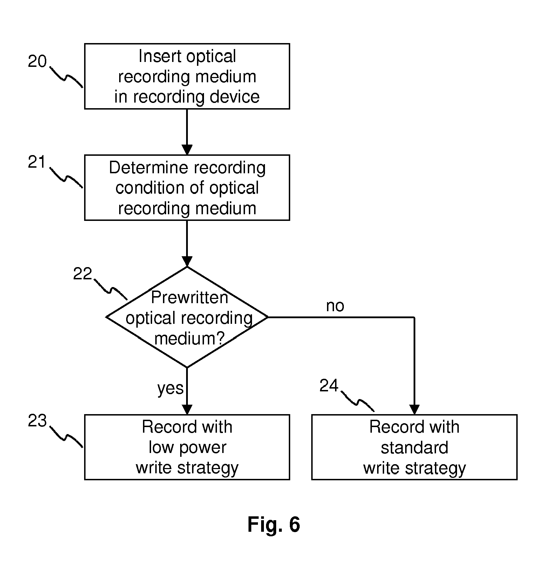

Fig. 6 schematically illustrates a method for recording on an optical recording medium, which is preferably used by a mobile recording device. When an optical recording medium is inserted 20 in the mobile device, first the recording condition of the optical recording medium is determined 21. When a checking 22 of the recording condition yields that the optical recording medium is already pre-written, recording is performed 23 with the special low power write strategy. If the optical recording medium is not yet pre-written, a standard write strategy is used 24.

## Claims

1. Method for recording on an optical recording medium, **having** the steps of:
- pre-writing (11) the optical recording medium with a constant power or a repeated inner multi-pulse part of a mark write pulse train while continuously following a track of the optical recording medium to pre-erase or pre-amorphize the optical recording medium; and
- recording (13) on the optical recording medium with a low-power write strategy, wherein an erase power (P_{E}) or a write power (P_{w}) are set to essentially zero for a pre-erased or a pre-amorphized optical recording medium, respectively.

2. Method for recording on an optical recording medium, **having** the step of recording a pre-erased or a pre-amorphized optical recording medium with a low-power write strategy, wherein an erase power (P_{E}) or a write power (P_{w}) are set to essentially zero for the pre-erased or the pre-amorphized optical recording medium, respectively.

3. Method according to claim 1 or 2, **wherein** the low-power write strategy further includes increasing the amplitude and/or duration of a leading pulse, a trailing pulse, and/or a middle pulse of a standard pulse train.

4. Method according to claim 3, **wherein** increasing the duration of a pulse includes at least one of:
- shifting forward the leading edge of the pulse,
- shifting backward the trailing edge of the pulse, and
- adding a reduced amplitude pulse step at the leading and/or trailing edge of the pulse.

5. Method according to one of claims 1 to 4, **wherein** pre-writing (11) is performed in a stationary device or in a mobile device while being connected to a power supply.

6. Method according to one of claims 1 to 5, **wherein** recording (13) is performed in a mobile device.

7. Method for preparing an optical recording medium for recording, **wherein** the optical recording medium is pre-written (11) with a constant power or a repeated inner multi-pulse part of a mark write pulse train while continuously following a track of the optical recording medium.

8. Optical recording medium, **characterized in that** it is prepared for recording with a method according to claim 7.

9. Method for recording on an optical recording medium, **having** the steps of:
- determining (21, 22) whether the optical recording medium is in a pre-erased or a pre-amorphized condition;
- if the optical recording medium is in a pre-erased or a pre-amorphized condition, performing recording (23) with a low power write strategy, wherein an erase power (P_{E}) or a write power (P_{w}) are set to essentially zero for a pre-erased or a pre-amorphized optical recording medium, respectively;
- if the optical recording medium is not in a pre-erased or a pre-amorphized condition, performing recording (24) with a standard write strategy.

10. Device for recording on an optical recording medium, **having**:
- a recording condition detector for determining if the optical recording medium is in a pre-erased or a pre-amorphized condition;
- a low power write strategy pulse generator for recording with a low power write strategy, wherein an erase power (P_{E}) or a write power (P_{w}) are set to essentially zero for a pre-erased or a pre-amorphized optical recording medium, respectively; and
- a standard write strategy pulse generator for recording with a standard write strategy.

11. Device for preparing an optical recording medium for recording, **having:**
- a recording condition detector for determining if the optical recording medium is in a pre-erased or a pre-amorphized condition; and
- a pre-write strategy pulse generator for pre-writing the optical recording medium with a constant power or a repeated inner multi-pulse part of a mark write pulse train while continuously following a track of the optical recording medium to pre-erase or pre-amorphize the optical recording medium.
